# EUROPÄISCHE PATENTSCHRIFT

(11) **EP 3 255 766 B1**
(45) Veröffentlichungstag und Bekanntmachung des Hinweises auf die Patenterteilung: **10.08.2022**
(21) Anmeldenummer: 17173976.6
(22) Anmeldetag: 01.06.2017
(51) Int. Cl.: H02M 1/08, H02M 1/088, H05K 1/02, H02M 1/092

(54) **HAUSHALTSGERÄTEVORRICHTUNG UND VERFAHREN MIT EINER HAUSHALTSGERÄTEVORRICHTUNG**
DOMESTIC APPLIANCE DEVICE AND METHOD WITH A DOMESTIC APPLIANCE DEVICE
DISPOSITIF D'APPAREIL MÉNAGER ET PROCÉDÉ FAISANT APPEL À UN DISPOSITIF D'APPAREIL MÉNAGER

(30) Priorität: 09.06.2016 ES 201630784
(43) Veröffentlichungstag der Anmeldung: 13.12.2017
(73) Patentinhaber: BSH Hausgeräte GmbH, 81739 München (DE)
(72) Erfinder: Acevedo Simon, Arturo, 50009 Zaragoza (ES); Calvo Mestre, Carlos, 50009 Zaragoza (ES); Garcia-Izquierdo Gango, Oscar, 50008 Zaragoza (ES); Lazaro Amatriain, Guillermo, 22193 Igries (ES); Paricio Azcona, Jose Joaquin, 50010 Zaragoza (ES); Puyal Puente, Diego, 50014 Zaragoza (ES)

(56) Entgegenhaltungen:
- EP-A1- 1 143 604
- EP-A1- 2 112 861
- EP-A2- 2 733 740
- EP-A2- 2 887 519
- EP-B1- 2 733 740
- US-A- 5 751 557
- US-A- 6 097 582
- Nve Corporation: "IL41050TA Datasheet - High-Speed, Low-Power Isolated CAN Transceiver/REV. G", , 1. Juni 2013 (2013-06-01), XP055133717, 11409 Valley View Road, Eden Prairie, MN 55344-3617 Gefunden im Internet: URL:http://pdf.datasheetarchive.com/indexe rfiles/Datasheets-D6/DSAHI000109075.pdf [gefunden am 2014-08-07]

## Beschreibung

Die Erfindung betrifft eine Haushaltsgerätevorrichtung nach Anspruch 1 und ein Verfahren mit einer Haushaltsgerätevorrichtung nach Anspruch 10.

Aus dem Stand der Technik sind beispielsweise als Induktionskochfeldvorrichtungen ausgebildete Haushaltsgerätevorrichtungen bekannt, mit einem Wechselrichter, welcher zumindest einen Wechselrichterschalter aufweist, sowie mit einem Wechselrichtertreiber, welcher zu einer Ansteuerung des Wechselrichterschalters dient. Der Wechselrichtertreiber kann dabei entweder einem isolierten Wechselrichtertreiber oder einem nicht-isolierten Wechselrichtertreiber entsprechen. Ein Austausch eines nicht-isolierten Wechselrichtertreibers gegen einen isolierten Wechselrichtertreiber oder umgekehrt ist dabei nicht vorgesehen.

Die Dokumente EP 1 143 604 A1, EP 2 733 740 A2, EP 2 887 519 A2 und US 6 097 582 A offenbaren Treiberschaltungen für Halbleiterschaltelemente, insbesondere von Wechselrichtern.

Das Dokument "Nve Corporation, IL41050TA Datasheet - High-Speed, Low-Power Isolated CAN Transceiver/REV. G, 11409 Valley View Road, Eden Prairie, MN 55344-3617, (20130601)" offenbart einen kostengünstigen Hochgeschwindiakeits-Transceiver.

Die Druckschrift US 5 751 557 A offenbart eine Leiterplatte zur Aufnahme verschiedener Typen von SRAM-Speichervorrichtungen.

Aus der europäischen Patentanmeldung EP 2 112 861 A1 ist ein Lebensmittelzubereitungssystem zur kontaktlosen Stromversorgung eines Lebensmittelzubereitungsaeräts bekannt.

Die Aufgabe der Erfindung besteht insbesondere darin, eine gattungsgemäße Haushaltsgerätevorrichtung mit verbesserten Eigenschaften hinsichtlich einer Flexibilität bereitzustellen. Die Aufgabe wird durch die kennzeichnenden Merkmale der Patentansprüche 1 und 10 gelöst, während vorteilhafte Ausgestaltungen und Weiterbildungen der Erfindung den Unteransprüchen entnommen werden können.

Die Erfindung geht aus von einer Haushaltsgerätevorrichtung mit zumindest einer Wechselrichtereinheit, welche wenigstens einen Wechselrichterschalter umfasst.

Erfindungsgemäß weist die Haushaltsgerätevorrichtung zumindest eine dem Wechselrichterschalter zugeordnete Treiberkonfigurationseinheit auf, welche dazu vorgesehen ist, den Wechselrichterschalter wahlweise mit zumindest einem von zumindest zwei Wechselrichtertreibern unterschiedlichen Typs zu verbinden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Haushaltsgerätevorrichtung" soll in diesem Zusammenhang insbesondere zumindest ein Teil, insbesondere eine Unterbaugruppe, eines vollständig montierten und/oder fertigen Haushaltsgeräts, zumindest ein Teil, insbesondere eine Unterbaugruppe, eines unvollständig montierten und/oder unfertigen Haushaltsgeräts, insbesondere ein Vorprodukt eines Haushaltsgeräts, und/oder ein Bausatz für ein Haushaltsgerät verstanden werden. Das Haushaltsgerät kann dabei als beliebiges Haushaltsgerät ausgebildet sein, wie beispielsweise als Waschgerät, als Kältegerät, insbesondere als Kühl- und/oder Gefriergerät, und/oder vorzugsweise als Gargerät, insbesondere als Backofen, als Dampfgarer, als Mikrowelle und/oder besonders bevorzugt als Kochfeld, insbesondere Induktionskochfeld. Insbesondere kann die Haushaltsgerätevorrichtung dabei zumindest eine Wechselrichtertreibereinheit, zumindest eine Benutzerschnittstelle und/oder zumindest eine Steuereinheit umfassen.

Die Wechselrichtereinheit weist im vorliegenden Fall zumindest einen Wechselrichter auf. Der Wechselrichter umfasst dabei insbesondere wenigstens zwei, vorzugsweise in Reihe geschaltete und vorzugsweise zueinander identische, Wechselrichterschalter, insbesondere zumindest einen Low-Side-Schalter und zumindest einen High-Side-Schalter, die insbesondere in einem Betriebszustand periodisch geschaltet werden, und ist insbesondere dazu vorgesehen, einen oszillierenden elektrischen Strom, vorteilhaft einen Heizstrom, vorzugsweise mit einer Frequenz von zumindest 1 kHz, insbesondere von wenigstens 10 kHz und vorteilhaft von mindestens 20 kHz bereitzustellen und/oder zu erzeugen. Insbesondere kann die Wechselrichtereinheit auch mehrere, vorteilhaft zumindest im Wesentlichen baugleiche und/oder bevorzugt zumindest im Wesentlichen identische, Wechselrichter, insbesondere zumindest zwei, zumindest drei und/oder zumindest vier Wechselrichter, aufweisen. Unter "zumindest im Wesentlichen baugleichen" Objekten sollen dabei insbesondere Objekte verstanden werden, welche zu einer Erfüllung einer selben Aufgabe vorgesehen sind, sich jedoch insbesondere in zumindest einem Merkmal, wie beispielsweise einem inneren Aufbau und/oder einem verwendeten Bauteil, voneinander unterscheiden können. Unter der Wendung "zumindest im Wesentlichen identisch" soll dabei insbesondere abgesehen von Fertigungstoleranzen und/oder im Rahmen fertigungstechnischer Möglichkeiten und/oder im Rahmen standardisierter Toleranzen identisch verstanden werden. Unter einem "Wechselrichterschalter" soll in diesem Zusammenhang insbesondere eine, vorzugsweise bidirektionale und unipolare, Schalteinheit verstanden werden, die insbesondere zumindest einen, insbesondere ansteuerbaren, Steueranschluss, vorteilhaft einen Basis-Anschluss und/oder einen Gate-Anschluss, zumindest einen, insbesondere schaltbaren, Schalteingangsanschluss und zumindest einen, insbesondere schaltbaren, Schaltausgangsanschluss aufweist. Vorteilhaft ist der Wechselrichterschalter dabei als Leistungsschalter ausgebildet und insbesondere dazu vorgesehen, einen Strom von zumindest 0,5 A, vorzugsweise zumindest 4 A und besonders bevorzugt zumindest 10 A, insbesondere periodisch, zu schalten. Unter einer "Schalteinheit" soll dabei insbesondere eine Einheit verstanden werden, welche wenigstens ein Schaltelement, vorteilhaft Halbleiterschaltelement, und vorzugsweise eine, insbesondere zu dem Schaltelement parallel geschaltete, Diode umfasst. Zudem kann die Schalteinheit insbesondere eine, insbesondere zu dem Schaltelement und/oder zu der Diode parallel geschaltete, Kapazität, insbesondere Dämpfungskapazität, aufweisen. Die Schalteinheit kann im vorliegenden Fall als eine beliebige Schalteinheit ausgebildet sein, wie beispielsweise als Transistor, vorzugsweise als FET, als MOSFET und/oder als IGBT.

Ferner soll unter einer "Wechselrichtertreibereinheit" insbesondere eine, insbesondere elektronische, Einheit verstanden werden, welche zumindest einen Wechselrichtertreiber umfasst und insbesondere zu einer Ansteuerung der Wechselrichtereinheit vorgesehen ist. Der Wechselrichtertreiber umfasst dabei insbesondere zumindest einen, vorteilhaft in einem montierten Zustand mit der Steuereinheit verbundenen, Treibereingang und insbesondere zumindest einen, vorteilhaft in dem montierten Zustand mit dem Wechselrichterschalter, insbesondere dem Steueranschluss des Wechselrichterschalters, verbundenen, Treiberausgang, und ist insbesondere dazu vorgesehen, in zumindest einem Anwendungszustand und/oder in zumindest einem Betriebszustand ein, insbesondere an dem Treibereingang anliegendes Signal, insbesondere Stromsignal und/oder Spannungssignal, insbesondere der Steuereinheit, zu verstärken und insbesondere dem Wechselrichterschalter zuzuführen. Insbesondere ist der Wechselrichtertreiber dabei zu einem Wechsel, insbesondere einem Umschalten, eines Schaltzustands des Wechselrichterschalters vorgesehen. Vorteilhaft umfasst die Wechselrichtertreibereinheit dabei mehrere Wechselrichtertreiber. Besonders bevorzugt weist die Wechselrichtertreibereinheit für jeden Wechselrichterschalter zumindest einen, vorteilhaft in zumindest einem Anwendungszustand und/oder in zumindest einem Betriebszustand genau einen, Wechselrichtertreiber auf. Insbesondere kann die Wechselrichtertreibereinheit auch die zumindest zwei Wechselrichtertreiber unterschiedlichen Typs aufweisen. Unter "Objekten unterschiedlichen Typs" sollen in diesem Zusammenhang insbesondere unterschiedliche und/oder verschiedene Objekte, vorteilhaft desselben Gerätetyps, verstanden werden, die sich insbesondere in ihrer Funktionsweise und/oder ihrem Aufbau zumindest teilweise unterscheiden. Darüber hinaus kann die Wechselrichtertreibereinheit vorteilhaft die Treiberkonfigurationseinheit aufweisen. Erfindungsgemäß ist die Treiberkonfigurationseinheit eine konfigurierbare Einheit , welche dazu vorgesehen ist, eine Änderung des dem Wechselrichterschalter zugeordneten Wechselrichtertreibers zu ermöglichen. Die Treiberkonfigurationseinheit ist dabei mit dem Wechselrichterschalter, vorzugsweise unmittelbar, elektrisch verbunden. Ferner ist die Treiberkonfigurationseinheit mit der Steuereinheit, vorzugsweise unmittelbar, elektrisch verbunden. Die Treiberkonfigurationseinheit ist zwischen der Steuereinheit und dem Wechselrichterschalter angeordnet und unterbricht vorzugsweise in zumindest einem Anwendungszustand, in zumindest einem Betriebszustand und/oder zumindest bei einer Herstellung wenigstens eine, insbesondere direkte elektrische, Verbindung zwischen der Steuereinheit und dem Wechselrichterschalter. Erfindungsgemäß ist die Treiberkonfigurationseinheit dazu vorgesehen, zumindest zwei, vorteilhaft genau zwei, verschiedene elektrische Verbindungen und/oder Leitungspfade zwischen der Steuereinheit und dem Wechselrichterschalter bereitzustellen und/oder zu ermöglichen. Unter einer "Änderung eines Wechselrichtertreibers" soll dabei ein manueller und/oder mechanischer Vorgang, insbesondere durch einen Bediener und/oder einen Monteur, verstanden werden, in welchem zwischen zumindest zwei Wechselrichtertreibern unterschiedlichen Typs gewechselt wird, insbesondere manuell und/oder automatisch. Die Treiberkonfigurationseinheit ist dazu vorgesehen, den Wechselrichterschalter in zumindest einem ersten Anwendungszustand und/oder in zumindest einem ersten Betriebszustand mit einem ersten Wechselrichtertreiber eines ersten Typs und in zumindest einem zweiten Anwendungszustand und/oder in zumindest einem zweiten Betriebszustand mit einem zweiten Wechselrichtertreiber eines von dem ersten Typ verschiedenen zweiten Typs zu verbinden. Erfindungsgemäß umfasst die Treiberkonfigurationseinheit zur Auswahl und/oder zum Wechsel des Wechselrichtertreibers zumindest zwei Verbindungsstellen. Unter einer "Verbindungsstelle" soll in diesem Fall ein Steckplatz für ein Objekt verstanden werden. Die Verbindungsstellen sind als Treiberverbindungsstellen für zumindest einen Wechselrichtertreiber ausgebildet. Durch diese Ausgestaltung kann eine Haushaltsgerätevorrichtung mit verbesserten Eigenschaften hinsichtlich einer Flexibilität bereitgestellt werden. Insbesondere kann die Haushaltsgerätevorrichtung dabei vorteilhaft an verschiedene Anforderungen und/oder Betriebsbedingungen angepasst werden. Zudem kann vorteilhaft eine Effizienz, insbesondere eine Fertigungseffizienz, eine Herstellungseffizienz, eine Bauteileeffizienz und/oder eine Kosteneffizienz, verbessert werden. Eine besonders flexible Treiberkonfigurationseinheit kann erfindungsgemäß dadurch erreicht werden, dass die Treiberkonfigurationseinheit zumindest eine erste Treiberverbindungsstelle, welche zur Verbindung mit einem ersten Wechselrichtertreiber, eines ersten Typs der Wechselrichtertreiber vorgesehen ist, und eine zweite Treiberverbindungsstelle aufweist, welche zur Verbindung mit einem zweiten Wechselrichtertreiber eines zweiten Typs der Wechselrichtertreiber vorgesehen ist. Die Treiberkonfigurationseinheit weist in diesem Fall zumindest zwei Treiberverbindungsstellen auf, welche dazu vorgesehen sind wahlweise mit zumindest einem der zumindest zwei Wechselrichtertreiber unterschiedlichen Typs verbunden zu werden. Dabei ist in zumindest einem Anwendungszustand und/oder zumindest einem Betriebszustand an zumindest einer der Treiberverbindungsstellen einer der Wechseltrichtertreiber unterschiedlichen Typs angeordnet.

Ist die Treiberkonfigurationseinheit dazu vorgesehen, den Wechselrichterschalter mit zumindest einem nicht-isolierten ersten Wechselrichtertreiber und/oder mit zumindest einem isolierten zweiten Wechselrichtertreiber zu verbinden, kann eine besonders vorteilhafte Anpassung der Haushaltsgerätevorrichtung erreicht werden. Insbesondere entsprechen die zwei Wechselrichtertreiber unterschiedlichen Typs in diesem Fall einem nicht-isolierten Wechselrichtertreiber und einem isolierten Wechselrichtertreiber. Unter einem "isolierten Wechselrichtertreiber" soll in diesem Zusammenhang insbesondere ein Wechselrichtertreiber verstanden werden, welcher zumindest eine, insbesondere galvanische, Trennstelle aufweist, welche vorteilhaft dazu vorgesehen ist, die Steuereinheit galvanisch von dem Wechselrichterschalter zu trennen. Eine Trennung kann dabei insbesondere induktiv, optisch und/oder kapazitiv erfolgen. Unter einem "nicht-isolierten Wechselrichtertreiber" soll in diesem Zusammenhang insbesondere ein Wechselrichtertreiber verstanden werden, welcher frei von einer, insbesondere galvanischen, Trennstelle ist und vorteilhaft dazu vorgesehen ist, die Steuereinheit galvanisch mit dem Wechselrichterschalter zu verbinden.

Der Wechselrichterschalter könnte beispielsweise als High-Side-Schalter ausgebildet sein. Vorteilhaft wird jedoch vorgeschlagen, dass der Wechselrichterschalter als Low-Side-Schalter ausgebildet ist, wodurch insbesondere eine vorteilhaft einfache Konfiguration und/oder ein vorteilhafter Steueralgorithmus erreicht werden kann.

Erfindungsgemäß weist die Haushaltsgerätevorrichtung die bereits zuvor genannte Steuereinheit auf, welche zur Steuerung der Wechselrichtereinheit und zur Steuerung eines Schaltzustands des Wechselrichterschalters vorgesehen ist. Hierdurch kann eine vorteilhaft einfache Ansteuerung des Wechselrichterschalters und/oder eines dem Wechselrichterschalter zugeordneten, Wechselrichtertreibers erreicht werden.

Die Steuereinheit könnte beispielsweise schwebend betrieben werden und insbesondere frei von einem, insbesondere als Masse dienenden, Referenzanschluss sein. Vorzugsweise ist die Steuereinheit jedoch mit einem von einer Gehäusemasse, insbesondere eines Gehäuses des Haushaltsgeräts, verschiedenen, insbesondere der Steuereinheit als Masse dienenden, Referenzanschluss, insbesondere Referenzpotentialanschluss, verbunden. Insbesondere definiert der Referenzanschluss in diesem Fall ein Referenzpotential der Steuereinheit. Vorteilhaft entspricht der Referenzanschluss dabei einem, vorteilhaft mittels einer Gleichrichtereinheit der Haushaltsgerätevorrichtung, gleichgerichteten Netzspannungsanschluss, insbesondere zumindest einer Phase. Besonders bevorzugt ist die Gehäusemasse geerdet und/oder mit einer Schutzerde verbunden. Hierdurch kann insbesondere eine Wechselrichtertreiberkonfiguration optimiert werden, wodurch insbesondere ein vorteilhafter Betrieb und/oder eine vorteilhaft kostengünstige Ausgestaltung erreicht werden kann.

Des Weiteren wird vorgeschlagen, dass die Haushaltsgerätevorrichtung zumindest eine Kommunikationseinheit aufweist, welche die Steuereinheit kommunizierend mit einer Benutzerschnittstelle, insbesondere der bereits zuvor genannten Benutzerschnittstelle, verbindet und welche vorteilhaft zumindest eine Isoliereinheit aufweist, welche die Steuereinheit galvanisch von der Benutzerschnittstelle trennt. Die Kommunikationseinheit ist dabei vorteilhaft als Bus-Verbindung ausgebildet. Ferner kann die Isoliereinheit als beliebige Isoliereinheit ausgebildet sein, wie beispielsweise als induktive Isoliereinheit, als optische Isoliereinheit und/oder als kapazitive Isoliereinheit. Hierdurch können insbesondere Sicherheitsbestimmungen erfüllt und/oder eine Betriebssicherheit gewährleistet werden.

In einer bevorzugten Ausgestaltung der Erfindung wird vorgeschlagen, dass die Haushaltsgerätevorrichtung zumindest eine weitere Treiberkonfigurationseinheit aufweist, wobei die Wechselrichtereinheit wenigstens einen weiteren Wechselrichterschalter aufweist und die weitere Treiberkonfigurationseinheit dem weiteren Wechselrichterschalter zugeordnet und dazu vorgesehen ist, den weiteren Wechselrichterschalter, insbesondere wahlweise, mit zumindest einem von zumindest zwei weiteren Wechselrichtertreibern unterschiedlichen Typs zu verbinden. Vorteilhaft ist die weitere Treiberkonfigurationseinheit zu der Treiberkonfigurationseinheit zumindest im Wesentlichen baugleich. Zudem ist der weitere Wechselrichterschalter vorzugsweise zu dem Wechselrichterschalter zumindest im Wesentlichen baugleich. Ferner sind die weiteren Wechselrichtertreiber unterschiedlichen Typs bevorzugt zu den Wechselrichtertreibern unterschiedlichen Typs zumindest im Wesentlichen baugleich. Besonders vorteilhaft weist die Haushaltsgerätevorrichtung für jeden Wechselrichterschalter der Wechselrichtereinheit eine Treiberkonfigurationseinheit auf, sodass insbesondere jeder der Wechselrichterschalter, insbesondere wahlweise, mit zumindest einem von zumindest zwei weiteren Wechselrichtertreibern unterschiedlichen Typs verbindbar ist. Hierdurch kann insbesondere eine Flexibilität weiter erhöht werden.

Der weitere Wechselrichterschalter könnte beispielsweise einem Low-Side-Schalter eines weiteren Wechselrichters entsprechen. Vorzugsweise ist der weitere Wechselrichterschalter jedoch als High-Side-Schalter, insbesondere des Wechselrichters und/oder eines weiteren Wechselrichters, ausgebildet. Hierdurch kann die Haushaltsgerätevorrichtung insbesondere flexibel an äußere Bedingungen und/oder Anforderungen angepasst werden.

In einer bevorzugten Ausgestaltung der Erfindung wird vorgeschlagen, dass die Haushaltsgerätevorrichtung zumindest ein Trägerelement, wie beispielsweise eine Platine und/oder Leiterplatte, aufweist, auf welchem zumindest die Treiberkonfigurationseinheit und die Wechselrichtereinheit angeordnet sind. Vorteilhaft sind ferner zumindest in einem Anwendungszustand und/oder in zumindest einem Betriebszustand die Wechselrichtertreibereinheit und/oder die Steuereinheit auf dem Trägerelement angeordnet. Bevorzugt ist das Trägerelement erweiterbar ausgebildet und kann insbesondere mit zumindest einem, vorteilhaft zu dem Trägerelement zumindest im Wesentlichen baugleichen und/oder bevorzugt identischen, weiteren Trägerelement, insbesondere der Haushaltsgerätevorrichtung und/oder einer weiteren Haushaltsgerätevorrichtung, verbunden und/oder erweitert werden. Hierdurch kann ein vorteilhaft vorkonfektioniertes und/oder zumindest teilweise vorkonfektioniertes Bauteil bereitgestellt werden.

Zudem geht die Erfindung aus von einem Verfahren mit einer Haushaltsgerätevorrichtung, insbesondere einer Gargerätevorrichtung, welche zumindest eine Wechselrichtereinheit aufweist, welche wenigstens einen Wechselrichterschalter umfasst.

Erfindungsgemäß wird der Wechselrichterschalter wahlweise, mit zumindest einem von zumindest zwei Wechselrichtertreibern unterschiedlichen Typs betrieben. Hierdurch kann insbesondere eine Flexibilität erhöht werden, wobei die Haushaltsgerätevorrichtung vorteilhaft an verschiedene Anforderungen und/oder Betriebsbedingungen angepasst werden kann. Zudem kann vorteilhaft eine Effizienz, insbesondere eine Fertigungseffizienz, eine Herstellungseffizienz, eine Bauteileeffizienz und/oder eine Kosteneffizienz, verbessert werden.

Erfindungsgemäß wird zumindest eine dem Wechselrichterschalter zugeordnete Treiberkonfigurationseinheit wahlweise mit zumindest einem der Wechselrichtertreiber bestückt, insbesondere durch einen Bediener, einen Monteur und/oder maschinell. Hierdurch kann insbesondere ein vorteilhaft vorkonfektioniertes und/oder zumindest teilweise vorkonfektioniertes Bauteil bereitgestellt werden.

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein beispielhaft als Induktionskochfeld ausgebildetes Haushaltsgerät mit einer Haushaltsgerätevorrichtung in einer schematischen Draufsicht,
- Fig. 2: eine Steuereinheit der Haushaltsgerätevorrichtung, eine Wechselrichtereinheit der Haushaltsgerätevorrichtung und eine Wechselrichtertreibereinheit der Haushaltsgerätevorrichtung mit mehreren Treiberkonfigurationseinheiten in einem teilweise montierten Zustand in einer schematischen Ansicht,
- Fig. 3: die Steuereinheit, die Wechselrichtereinheit und die Wechselrichtertreibereinheit in einem beispielhaften Betriebszustand in einer schematischen Ansicht,
- Fig. 4: eine weiteres Ausführungsbeispiel einer weiteren Haushaltsgerätevorrichtung und
- Fig. 5: ein weiteres Ausführungsbeispiel einer weiteren Haushaltsgerätevorrichtung.

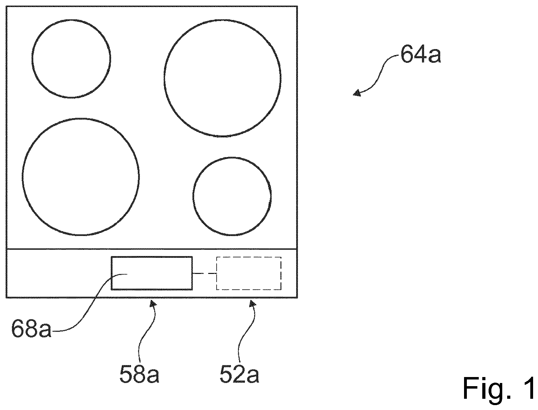

Figur 1 zeigt ein beispielhaftes als Gargerät ausgebildetes Haushaltsgerät 64a in einer schematischen Draufsicht. Im vorliegenden Fall ist das Haushaltsgerät 64a als Induktionskochfeld ausgebildet. Das Haushaltsgerät 64a weist dabei eine Kochfeldplatte mit vier Heizzonen auf. Alternativ könnte ein als Induktionskochfeld ausgebildetes Haushaltsgerät jedoch auch als Matrixkochfeld ausgebildet sein und insbesondere eine variable Kochfeldplatte mit veränderlichen Heizzonen aufweisen. Zudem ist denkbar, ein Haushaltsgerät als beliebiges anderes Haushaltsgerät auszubilden, wie beispielsweise als Waschgerät, als Kältegerät und/oder als Backofen.

Das Haushaltsgerät 64a umfasst eine Haushaltsgerätevorrichtung. Die Haushaltsgerätevorrichtung weist im vorliegenden Fall eine Heizeinheit auf (nicht dargestellt). Die Heizeinheit umfasst dabei mehrere, im vorliegenden Fall insbesondere als Induktoren ausgebildete, Heizelemente, wobei jeder der Heizzonen eines der Heizelemente zugeordnet ist.

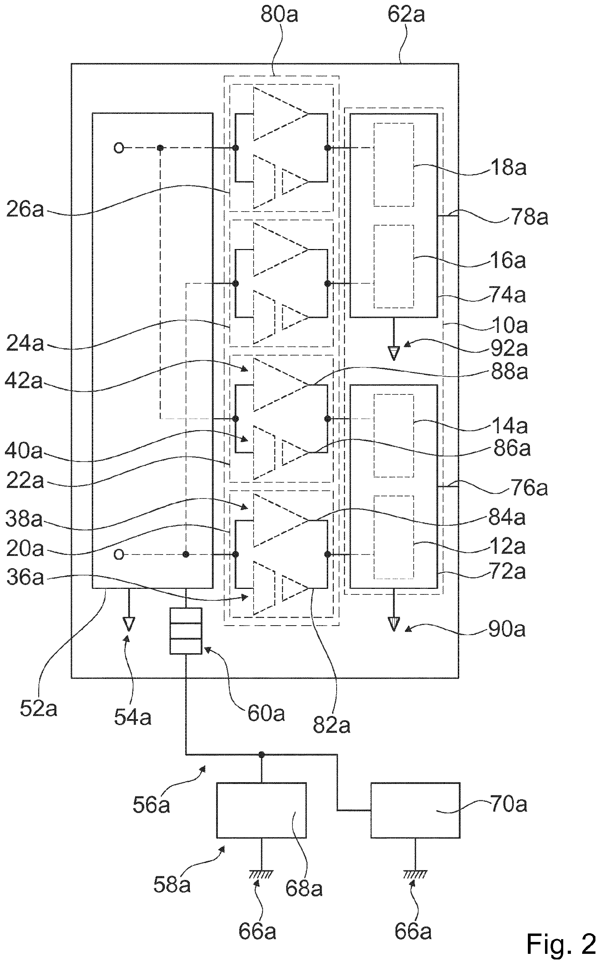

Die Haushaltsgerätevorrichtung weist ferner eine Benutzerschnittstelle 58a auf. Die Benutzerschnittstelle 58a ist als Bedieneinheit ausgebildet. Die Benutzerschnittstelle 58a dient zur Eingabe und/oder Auswahl verschiedener Parameter, wie beispielsweise einer Leistungsstufe, durch einen Benutzer. Die Benutzerschnittstelle 58a weist zumindest ein Bedienelement 68a auf, welches an einer einem Benutzer zugewandten Seite des Haushaltsgeräts 64a angeordnet ist. Das Bedienelement 68a ist dabei beispielsweise als berührungsempfindliches Display und/oder als Drehknopf ausgebildet. Zudem kann die Benutzerschnittstelle 58a zumindest ein weiteres Bedienelement 70a aufweisen (vgl. auch Figur 2). Das weitere Bedienelement 70a ist dabei innerhalb des Haushaltsgeräts 64a angeordnet und kann beispielsweise dazu vorgesehen sein, eine drahtlose Bedienung zu ermöglichen, wie beispielsweise mittels eines Smartphones, eines Tablets und/oder eines Computers oder dergleichen. Alternativ könnte auf ein Bedienelement und/oder eine weiteres Bedienelement jedoch auch verzichtet werden.

Die Benutzerschnittstelle 58a ist mit einer, insbesondere der Benutzerschnittstelle 58a als Masse dienenden, Gehäusemasse 66a, insbesondere eines Gehäuses des Haushaltsgeräts 64a, verbunden. Die Gehäusemasse 66a ist im vorliegenden Fall zum Schutz eines Benutzers und/oder zur Erhöhung einer Betriebssicherheit mit einem Schutzleiter und/oder mit einer Schutzerde verbunden. Die Gehäusemasse 66a definiert im vorliegenden Fall ein Referenzpotential der Benutzerschnittstelle 58a. Prinzipiell ist jedoch auch denkbar, eine Benutzerschnittstelle mit einem beliebigen anderen Referenzpotential zu verbinden.

Zur Steuerung eines Betriebs und/oder einer Heizleistung umfasst die Haushaltsgerätevorrichtung zumindest eine Steuereinheit 52a. Die Steuereinheit 52a weist eine Recheneinheit, eine Speichereinheit und ein in der Speichereinheit hinterlegtes Betriebsprogramm auf, das dazu vorgesehen ist, von der Recheneinheit ausgeführt zu werden. Die Steuereinheit 52a umfasst im vorliegenden Fall zumindest einen Mikrocontroller.

Die Steuereinheit 52a ist mit einem, insbesondere der Steuereinheit 52a als Masse dienenden, Referenzanschluss 54a, insbesondere Referenzpotentialanschluss und/oder Äquipotentialanschluss, verbunden. Der Referenzanschluss 54a entspricht im vorliegenden Fall einem gleichgerichteten Netzspannungsanschluss, insbesondere einer ersten Phase, der Haushaltsgerätevorrichtung. Der Referenzanschluss 54a ist von der Gehäusemasse 66a verschieden. Demzufolge ist die Steuereinheit 52a mit einem von der Gehäusemasse 66a verschiedenen Referenzanschluss 54a verbunden. Der Referenzanschluss 54a definiert ein Referenzpotential der Steuereinheit 52a. Prinzipiell ist jedoch auch denkbar, eine Steuereinheit schwebend zu betreiben. Zudem könnte eine Steuereinheit mit einem gleichgerichteten Netzspannungsanschluss einer von einer ersten Phase abweichenden Phase und/oder mit einem beliebigen anderen Referenzanschluss verbunden sein.

Ferner ist die Steuereinheit 52a kommunizierend mit der Benutzerschnittstelle 58a verbunden. Dazu umfasst die Haushaltsgerätevorrichtung eine Kommunikationseinheit 56a. Die Kommunikationseinheit 56a ist als Bus-Verbindung ausgebildet. Insbesondere um eine Betriebssicherheit zu erhöhen und/oder eine Funktionsbeeinträchtigung des Haushaltsgeräts 64a zu verhindern, insbesondere aufgrund der verschiedenen Referenzpotentiale der Benutzerschnittstelle 58a und der Steuereinheit 52a, weist die Kommunikationseinheit 56a eine Isoliereinheit 60a auf. Die Isoliereinheit 60a trennt die Steuereinheit 52a galvanisch von der Benutzerschnittstelle 58a. Die Isoliereinheit 60a kann dabei als induktive Isoliereinheit, als optische Isoliereinheit und/oder als kapazitive Isoliereinheit ausgebildet sein. Prinzipiell könnte auf eine Isoliereinheit jedoch auch verzichtet werden. In diesem Fall könnte eine Benutzerschnittstelle, insbesondere anstatt mit einer Gehäusemasse, mit einem zu einem Referenzanschluss einer Steuereinheit äquivalenten Referenzanschluss verbunden sein.

Insbesondere zu einer Versorgung der Heizeinheit mit einem Heizstrom, umfasst die Haushaltsgerätevorrichtung ferner eine Wechselrichtereinheit 10a. Die Wechselrichtereinheit 10a umfasst im vorliegenden Fall beispielhaft zwei Wechselrichter 72a, 74a, welche insbesondere jeweils in einer Halbbrückenkonfiguration angeordnet sind. Alternativ könnte eine Wechselrichtereinheit jedoch auch eine beliebige andere Anzahl an Wechselrichtern aufweisen, wie beispielsweise genau einen Wechselrichter oder zumindest drei und/oder zumindest vier Wechselrichter. Zudem ist denkbar, Wechselrichter in einer Vollbrückenkonfiguration anzuordnen oder dergleichen.

Ein erster Wechselrichter 72a der Wechselrichter 72a, 74a ist dazu vorgesehen, eine pulsierende gleichgerichtete Netzspannung einer Energiequelle und/oder einer Energiespeichereinheit in einen hochfrequenten Strom umzuwandeln, an einem ersten Wechselrichterausgang 76a bereitzustellen und im vorliegenden Fall insbesondere der Heizeinheit und/oder zumindest einem Heizelement der Heizeinheit zuzuführen.

Dazu umfasst der erste Wechselrichter 72a einen ersten Wechselrichterschalter 12a und einen zweiten Wechselrichterschalter 14a. Der erste Wechselrichterschalter 12a ist als Low-Side-Schalter ausgebildet. Der zweite Wechselrichterschalter 14a ist als High-Side-Schalter ausgebildet. Der erste Wechselrichterschalter 12a und der zweite Wechselrichterschalter 14a sind dazu vorgesehen, in einem Betriebszustand abwechselnd und/oder periodisch geschaltet zu werden. Der erste Wechselrichterschalter 12a und der zweite Wechselrichterschalter 14a sind zumindest im Wesentlichen zueinander identisch. Der erste Wechselrichterschalter 12a und der zweite Wechselrichterschalter 14a sind als bidirektionale, unipolare Halbleiterschalter ausgebildet. Der erste Wechselrichterschalter 12a und der zweite Wechselrichterschalter 14a sind im vorliegenden Fall beispielhaft als IGBT ausgebildet.

Ferner ist der erste Wechselrichter 72a in einem Betriebszustand mit einem, insbesondere dem ersten Wechselrichter 72a als Masse dienenden, ersten Wechselrichterreferenzanschluss 90a, insbesondere Referenzpotentialanschluss und/oder Äquipotentialanschluss, verbunden. Der erste Wechselrichterreferenzanschluss 90a ist von der Gehäusemasse 66a verschieden. Demzufolge ist der erste Wechselrichter 72a in dem Betriebszustand mit einem von der Gehäusemasse 66a verschiedenen ersten Wechselrichterreferenzanschluss 90a verbunden. Der erste Wechselrichterreferenzanschluss 90a definiert im vorliegenden Fall ein Referenzpotential des ersten Wechselrichters 72a.

Ein zweiter Wechselrichter 74a der Wechselrichter 72a, 74a ist dazu vorgesehen, eine pulsierende gleichgerichtete Netzspannung einer Energiequelle und/oder einer Energiespeichereinheit, vorteilhaft der bereits zuvor genannten Energiequelle und/oder Energiespeichereinheit, in einen hochfrequenten Strom umzuwandeln, an einem zweiten Wechselrichterausgang 78a bereitzustellen und im vorliegenden Fall insbesondere der Heizeinheit und/oder zumindest einem Heizelement der Heizeinheit zuzuführen.

Dazu umfasst der zweite Wechselrichter 74a einen dritten Wechselrichterschalter 16a und einen vierten Wechselrichterschalter 18a. Der dritte Wechselrichterschalter 16a ist als Low-Side-Schalter ausgebildet. Der vierte Wechselrichterschalter 18a ist als High-Side-Schalter ausgebildet. Der dritte Wechselrichterschalter 16a und der vierte Wechselrichterschalter 18a sind dazu vorgesehen, in einem Betriebszustand abwechselnd und/oder periodisch geschaltet zu werden: Der dritte Wechselrichterschalter 16a und der vierte Wechselrichterschalter 18a sind zumindest im Wesentlichen zueinander identisch. Der dritte Wechselrichterschalter 16a und der vierte Wechselrichterschalter 18a sind als bidirektionale, unipolare Halbleiterschalter ausgebildet. Der dritte Wechselrichterschalter 16a und der vierte Wechselrichterschalter 18a sind im vorliegenden Fall beispielhaft als IGBT ausgebildet.

Ferner ist der zweite Wechselrichter 74a in dem Betriebszustand mit einem, insbesondere dem zweiten Wechselrichter 74a als Masse dienenden, zweiten Wechselrichterreferenzanschluss 92a, insbesondere Referenzpotentialanschluss und/oder Äquipotentialanschluss, verbunden. Der zweite Wechselrichterreferenzanschluss 92a ist von der Gehäusemasse 66a verschieden. Demzufolge ist der zweite Wechselrichter 74a in dem Betriebszustand mit einem von der Gehäusemasse 66a verschiedenen zweiten Wechselrichterreferenzanschluss 92a verbunden. Der zweite Wechselrichterreferenzanschluss 92a definiert im vorliegenden Fall ein Referenzpotential des zweiten Wechselrichters 74a.

Im vorliegenden Fall können der erste Wechselrichter 72a und der zweite Wechselrichter 74a mit derselben Phase der Netzspannung und/oder mit unterschiedlichen Phasen der Netzspannung betrieben werden. Alternativ ist auch denkbar, Wechselrichterschalter eines Wechselrichters verschieden auszubilden und/oder als von IGBT abweichende Wechselrichterschalter zu verwenden.

Die Steuereinheit 52a ist im vorliegenden Fall zur Steuerung der Wechselrichtereinheit 10a und insbesondere zur Steuerung eines Schaltzustands der Wechselrichterschalter 12a, 14a, 16a, 18a des ersten Wechselrichters 72a und des zweiten Wechselrichters 74a vorgesehen. Dabei ist die Steuereinheit 52a dazu vorgesehen, Steuersignale, insbesondere Schaltsignale, vorteilhaft Logik-Signale, für die Wechselrichterschalter 12a, 14a, 16a, 18a des ersten Wechselrichters 72a und des zweiten Wechselrichters 74a bereitzustellen.

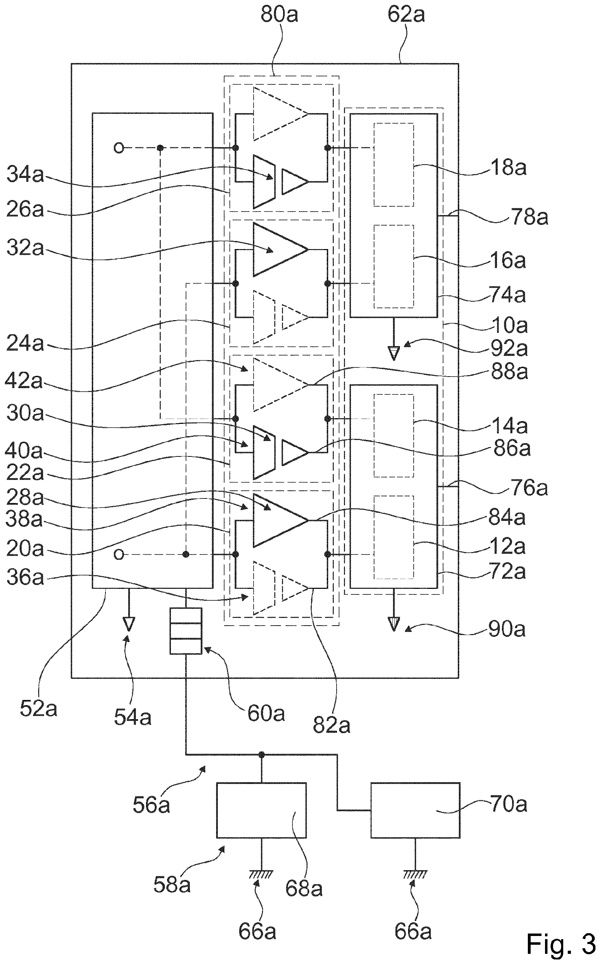

Insbesondere um die Steuersignale der Steuereinheit 52a zu verstärken und an benötigte und/oder vorteilhafte Stromstärken und/oder Spannungen der Wechselrichterschalter 12a, 14a, 16a, 18a anzupassen, umfasst die Haushaltsgerätevorrichtung eine Wechselrichtertreibereinheit 80a. Die Wechselrichtertreibereinheit 80a ist zwischen der Steuereinheit 52a und der Wechselrichtereinheit 10a angeordnet. Die Wechselrichtertreibereinheit 80a umfasst in einem montierten Zustand und/oder in dem Betriebszustand mehrere Wechselrichtertreiber 28a, 30a, 32a, 34a (vgl. insbesondere Figur 3). Im vorliegenden Fall umfasst die Wechselrichtertreibereinheit 80a in dem montierten Zustand und/oder in dem Betriebszustand für jeden Wechselrichterschalter 12a, 14a, 16a, 18a einen Wechselrichtertreiber 28a, 30a, 32a, 34a. Alternativ könnte eine Wechselrichtertreibereinheit in einem montierten Zustand und/oder in einem Betriebszustand prinzipiell jedoch auch für jeden Wechselrichterschalter zwei, drei und/oder vier, insbesondere parallel und/oder seriell geschaltete, Wechselrichtertreiber aufweisen.

Die Wechselrichtertreibereinheit 80a umfasst ferner zumindest eine Treiberkonfigurationseinheit 20a, 22a, 24a, 26a. Die Wechselrichtertreibereinheit 80a umfasst eine erste Treiberkonfigurationseinheit 20a. Die erste Treiberkonfigurationseinheit 20a ist dem, insbesondere als Low-Side-Schalter ausgebildeten, ersten Wechselrichterschalter 12a zugeordnet. Die erste Treiberkonfigurationseinheit 20a ist mit dem ersten Wechselrichterschalter 12a verbunden. Zudem ist die erste Treiberkonfigurationseinheit 20a mit der Steuereinheit 52a verbunden. Die erste Treiberkonfigurationseinheit 20a ist somit zwischen dem ersten Wechselrichterschalter 12a und der Steuereinheit 52a angeordnet und unterbricht in zumindest einem Zustand eine Verbindung zwischen dem ersten Wechselrichterschalter 12a und der Steuereinheit 52a.

Die erste Treiberkonfigurationseinheit 20a ist konfigurierbar ausgebildet. Die erste Treiberkonfigurationseinheit 20a ist dazu vorgesehen, eine Änderung eines ersten Wechselrichtertreibers 28a der Wechselrichtertreiber 28a, 30a, 32a, 32a zu ermöglichen, welcher in dem montierten Zustand und/oder dem Betriebszustand dem ersten Wechselrichterschalter 12a zugeordnet ist. Im vorliegenden Fall ist die erste Treiberkonfigurationseinheit 20a dazu vorgesehen, den ersten Wechselrichterschalter 12a wahlweise mit einem von zwei Wechselrichtertreibern 28a, 30a, 32a, 34a unterschiedlichen Typs, insbesondere wahlweise mit einem nicht-isolierten Wechselrichtertreiber oder einem isolierten Wechselrichtertreiber, zu verbinden.

Dazu stellt die erste Treiberkonfigurationseinheit 20a zwei verschiedene Leitungspfade 82a, 84a, insbesondere einen ersten Leitungspfad 82a und einen zweiten Leitungspfad 84a, zur Verbindung des ersten Wechselrichterschalters 12a und der Steuereinheit 52a bereit. Zudem umfasst die erste Treiberkonfigurationseinheit 20a zwei Treiberverbindungsstellen 36a, 38a, insbesondere eine erste Treiberverbindungsstelle 36a und eine zweite Treiberverbindungsstelle 38a, welche insbesondere in der Figur 2 gestrichelt dargestellt sind.

Die erste Treiberverbindungsstelle 36a ist in dem ersten Leitungspfad 82a der ersten Treiberkonfigurationseinheit 20a angeordnet. Die erste Treiberverbindungsstelle 36a unterbricht den ersten Leitungspfad 82a der ersten Treiberkonfigurationseinheit 20a. Die erste Treiberverbindungsstelle 36a ist als Steckplatz ausgebildet. Die erste Treiberverbindungsstelle 36a ist dabei zur Aufnahme eines isolierten Wechselrichtertreibers vorgesehen.

Die zweite Treiberverbindungsstelle 38a ist in dem zweiten Leitungspfad 84a der ersten Treiberkonfigurationseinheit 20a angeordnet. Die zweite Treiberverbindungsstelle 38a unterbricht den zweiten Leitungspfad 84a der ersten Treiberkonfigurationseinheit 20a. Die zweite Treiberverbindungsstelle 38a ist als Steckplatz ausgebildet. Die zweite Treiberverbindungsstelle 38a ist dabei zur Aufnahme eines nicht-isolierten Wechselrichtertreibers vorgesehen.

Die erste Treiberverbindungsstelle 36a und die zweite Treiberverbindungsstelle 38a können im vorliegenden Fall wahlweise mit einem Wechselrichtertreiber 28a, 30a, 32a, 34a bestückt werden, wodurch der erste Wechselrichterschalter 12a wahlweise mit einem von zwei Wechselrichtertreibern 28a, 30a, 32a, 34a eines unterschiedlichen Typs, insbesondere wahlweise mit einem nicht-isolierten Wechselrichtertreiber oder einem isolierten Wechselrichtertreiber, betrieben werden kann.

Die Wechselrichtertreibereinheit 80a umfasst ferner eine zweite Treiberkonfigurationseinheit 22a. Die zweite Treiberkonfigurationseinheit 22a ist dem, insbesondere als High-Side-Schalter ausgebildeten, zweiten Wechselrichterschalter 14a zugeordnet. Die zweite Treiberkonfigurationseinheit 22a ist mit dem zweiten Wechselrichterschalter 14a verbunden. Zudem ist die zweite Treiberkonfigurationseinheit 22a mit der Steuereinheit 52a verbunden. Die zweite Treiberkonfigurationseinheit 22a ist somit zwischen dem zweiten Wechselrichterschalter 14a und der Steuereinheit 52a angeordnet und unterbricht in zumindest einem Zustand eine Verbindung zwischen dem zweiten Wechselrichterschalter 14a und der Steuereinheit 52a.

Die zweite Treiberkonfigurationseinheit 22a ist konfigurierbar ausgebildet. Die zweite Treiberkonfigurationseinheit 22a ist dazu vorgesehen, eine Änderung eines zweiten Wechselrichtertreibers 30a der Wechselrichtertreiber 28a, 30a, 32a, 32a zu ermöglichen, welcher in dem montierten Zustand und/oder dem Betriebszustand dem zweiten Wechselrichterschalter 14a zugeordnet ist. Im vorliegenden Fall ist die zweite Treiberkonfigurationseinheit 22a dazu vorgesehen, den zweiten Wechselrichterschalter 14a wahlweise mit einem von zwei Wechselrichtertreibern 28a, 30a, 32a, 34a unterschiedlichen Typs, insbesondere wahlweise mit einem nicht-isolierten Wechselrichtertreiber oder einem isolierten Wechselrichtertreiber, zu verbinden.

Dazu stellt die zweite Treiberkonfigurationseinheit 22a zwei verschiedene Leitungspfade 86a, 88a, insbesondere einen dritten Leitungspfad 86a und einen vierten Leitungspfad 88a, zur Verbindung des zweiten Wechselrichterschalters 14a und der Steuereinheit 52a bereit. Zudem umfasst die zweite Treiberkonfigurationseinheit 22a zwei Treiberverbindungsstellen 40a, 42a, insbesondere eine dritte Treiberverbindungsstelle 40a und eine vierte Treiberverbindungsstelle 42a, welche insbesondere in der Figur 2 gestrichelt dargestellt sind.

Die dritte Treiberverbindungsstelle 40a ist in dem dritten Leitungspfad 86a der zweiten Treiberkonfigurationseinheit 22a angeordnet. Die dritte Treiberverbindungsstelle 40a unterbricht den dritten Leitungspfad 86a der zweiten Treiberkonfigurationseinheit 22a. Die dritte Treiberverbindungsstelle 40a ist als Steckplatz ausgebildet. Die dritte Treiberverbindungsstelle 40a ist dabei zur Aufnahme eines isolierten Wechselrichtertreibers vorgesehen.

Die vierte Treiberverbindungsstelle 42a ist in dem vierten Leitungspfad 88a der zweiten Treiberkonfigurationseinheit 22a angeordnet. Die vierte Treiberverbindungsstelle 42a unterbricht den vierten Leitungspfad 88a der zweiten Treiberkonfigurationseinheit 22a. Die vierte Treiberverbindungsstelle 42a ist als Steckplatz ausgebildet. Die vierte Treiberverbindungsstelle 42a ist dabei zur Aufnahme eines nicht-isolierten Wechselrichtertreibers vorgesehen.

Die dritte Treiberverbindungsstelle 40a und die vierte Treiberverbindungsstelle 42a können im vorliegenden Fall wahlweise mit einem Wechselrichtertreiber 28a, 30a, 32a, 34a bestückt werden, wodurch der zweite Wechselrichterschalter 14a wahlweise mit einem von zwei Wechselrichtertreibern 28a, 30a, 32a, 34a eines unterschiedlichen Typs, insbesondere wahlweise mit einem nicht-isolierten Wechselrichtertreiber oder einem isolierten Wechselrichtertreiber, betrieben werden kann.

Die Wechselrichtertreibereinheit 80a umfasst darüber hinaus eine dritte Treiberkonfigurationseinheit 24a. Die dritte Treiberkonfigurationseinheit 24a ist dem, insbesondere als weiterem Low-Side-Schalter ausgebildeten, dritten Wechselrichterschalter 16a zugeordnet. Die dritte Treiberkonfigurationseinheit 24a ist mit dem dritten Wechselrichterschalter 16a verbunden. Die dritte Treiberkonfigurationseinheit 24a ist zumindest im Wesentlichen identisch zu der ersten Treiberkonfigurationseinheit 20a. Demzufolge kann die vorherige Beschreibung zu der ersten Treiberkonfigurationseinheit 20a auf die dritte Treiberkonfigurationseinheit 24a übernommen werden.

Zudem umfasst die Wechselrichtertreibereinheit 80a eine vierte Treiberkonfigurationseinheit 26a. Die vierte Treiberkonfigurationseinheit 26a ist dem, insbesondere als weiterer High-Side-Schalter ausgebildeten, vierten Wechselrichterschalter 18a zugeordnet. Die vierte Treiberkonfigurationseinheit 24a ist mit dem vierten Wechselrichterschalter 18a verbunden. Die vierte Treiberkonfigurationseinheit 26a ist zumindest im Wesentlichen identisch zu der zweiten Treiberkonfigurationseinheit 22a. Demzufolge kann die vorherige Beschreibung zu der zweiten Treiberkonfigurationseinheit 22a auf die vierte Treiberkonfigurationseinheit 26a übernommen werden.

Im vorliegenden Fall weist die Haushaltsgerätevorrichtung somit für jeden Wechselrichterschalter 12a, 14a, 16a, 18a der Wechselrichtereinheit 10a eine Treiberkonfigurationseinheit 20a, 22a, 24a, 26a auf, sodass insbesondere jeder der Wechselrichterschalter 12a, 14a, 16a, 18a wahlweise mit zumindest einem von zumindest zwei Wechselrichtertreibern 28a, 30a, 32a, 34a unterschiedlichen Typs, insbesondere wahlweise mit einem nicht-isolierten Wechselrichtertreiber oder einem isolierten Wechselrichtertreiber, verbindbar ist. Alternativ könnte eine Haushaltsgerätevorrichtung und/oder eine Wechselrichtertreibereinheit jedoch auch eine andere Anzahl an Treiberkonfigurationseinheiten aufweisen, wie beispielsweise genau eine Treiberkonfigurationseinheit, zwei Treiberkonfigurationseinheiten und/oder drei Treiberkonfigurationseinheiten. Dabei ist insbesondere denkbar lediglich Wechselrichterschaltern, welche als Low-Side-Schalter oder als High-Side-Schalter ausgebildet sind, eine Treiberkonfigurationseinheit zuzuordnen und/oder lediglich Wechselrichterschaltern von einem der zwei Wechselrichtern eine Treiberkonfigurationseinheit zuzuordnen.

Figur 3 zeigt die Haushaltsgerätevorrichtung in dem montierten Zustand und/oder dem Betriebszustand. Dabei ist der, insbesondere als Low-Side-Schalter ausgebildete, erste Wechselrichterschalter 12a mit einem, insbesondere in der zweiten Treiberverbindungsstelle 38a angeordneten, insbesondere nicht-isolierten, ersten Wechselrichtertreiber 28a verbunden. Der erste Wechselrichtertreiber 28a entspricht dabei einem aus diskreten Bauteilen bestehendem Wechselrichtertreiber. Der, insbesondere als High-Side-Schalter ausgebildete, zweite Wechselrichterschalter 14a ist mit einem, insbesondere in der dritten Treiberverbindungsstelle 40a angeordneten, insbesondere isolierten, zweiten Wechselrichtertreiber 30a verbunden. Der zweite Wechselrichtertreiber 30a entspricht einem optisch und/oder magnetisch isolierten Wechselrichtertreiber. Der, insbesondere als weiterer Low-Side-Schalter ausgebildete, dritte Wechselrichterschalter 16a ist mit einem, insbesondere nicht-isolierten, dritten Wechselrichtertreiber 32a verbunden. Der dritte Wechselrichtertreiber 32a entspricht einem aus diskreten Bauteilen bestehendem Wechselrichtertreiber. Zudem ist der, insbesondere als weiterer High-Side-Schalter ausgebildete, vierte Wechselrichterschalter 18a mit einem, insbesondere isolierten, vierten Wechselrichtertreiber 34a verbunden. Der vierte Wechselrichtertreiber 34a entspricht einem optisch und/oder magnetisch isolierten Wechselrichtertreiber .

Das Referenzpotential des ersten Wechselrichters 72a und des zweiten Wechselrichters 74a kann somit wahlweise mit dem Referenzpotential der Steuereinheit 52a gekoppelt werden, insbesondere abhängig von einer Wahl der Wechselrichtertreiber 28a, 30a, 32a, 34a. Im vorliegenden Fall sind das Referenzpotential der Steuereinheit 52a, das Referenzpotential des ersten Wechselrichters 72a und das Referenzpotential des zweiten Wechselrichters 74a somit aufgrund der entsprechenden Wahl der Wechselrichtertreiber 34a zueinander identisch.

Somit entsprechen der erste Wechselrichterreferenzanschluss 90a und der zweite Wechselrichterreferenzanschluss 92a im vorliegenden Fall dem Referenzanschluss 54a der Steuereinheit 52a und insbesondere einem gleichgerichteten Netzspannungsanschluss, insbesondere der ersten Phase, der Haushaltsgerätevorrichtung. Alternativ könnten ein erster Wechselrichterreferenzanschluss und ein zweiter Wechselrichterreferenzanschluss auch mit verschiedenen Phasen eines gleichgerichteten Netzspannungsanschlusses verbunden sein.

Darüber hinaus umfasst die Haushaltsgerätevorrichtung im vorliegenden Fall ein Trägerelement 62a. Das Trägerelement 62a ist als Leiterplatte ausgebildet. Das Trägerelement 62a entspricht einer vorgefertigten Platine. Dabei ist zumindest eine der Treiberkonfigurationseinheiten 20a, 22a, 24a, 26a auf dem Trägerelement 62a angeordnet. Im vorliegenden Fall sind sämtliche Treiberkonfigurationseinheiten 20a, 22a, 24a, 26a auf dem Trägerelement 62a angeordnet. Zudem ist im montierten Zustand die Wechseirichtertreibereinheit 80a auf dem Trägerelement 62a angeordnet. Des Weiteren ist im montierten Zustand die Wechselrichtereinheit 10a auf dem Trägerelement 62a angeordnet. Darüber hinaus ist im montierten Zustand die Steuereinheit 52a auf dem Trägerelement 62a angeordnet. Ferner ist im montierten Zustand die Kommunikationseinheit 56a zumindest teilweise auf dem Trägerelement 62a angeordnet. Im vorliegenden Fall ist zumindest die Isoliereinheit 60a auf dem Trägerelement 62a angeordnet. Alternativ könnte auf ein Trägerelement jedoch auch verzichtet werden. Zudem ist denkbar, ein Trägerelement als beliebiges von einer Leiterplatte und/oder Platine abweichendes Trägerelement auszubilden. Zudem ist denkbar, lediglich einige der Bauteile einer Haushaltsgerätevorrichtung auf ein Trägerelement aufzubringen.

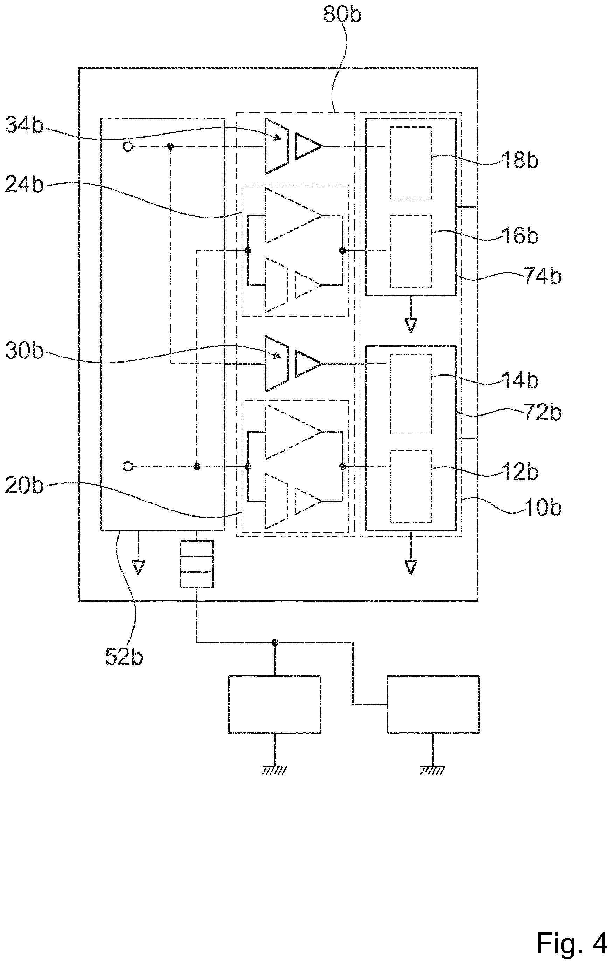

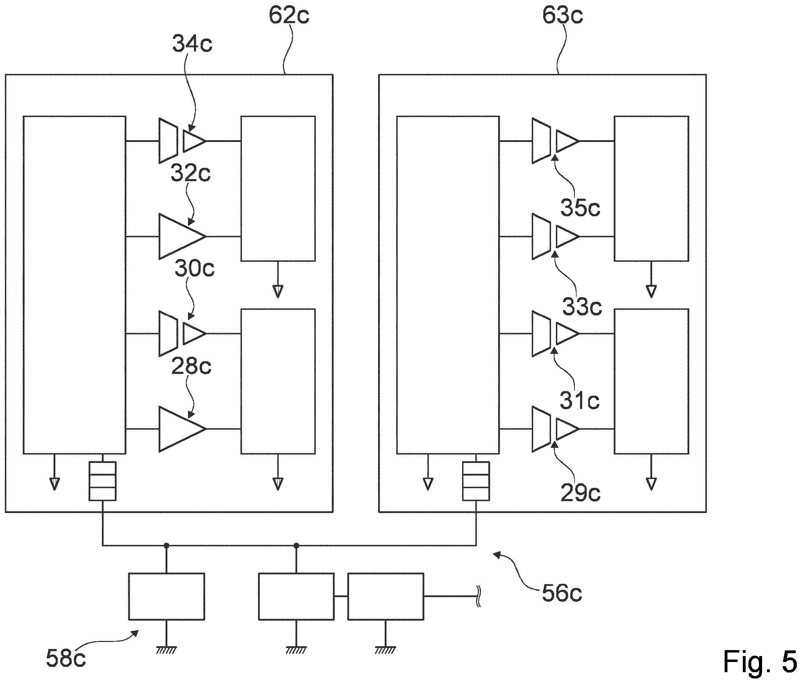

In den Figuren 4 und 5 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 und 5 ist der Buchstabe a durch die Buchstaben b und c ersetzt.

In Figur 4 ist ein weiteres Ausführungsbeispiel der Erfindung gezeigt. Dem Ausführungsbeispiel der Figur 4 ist der Buchstabe b nachgestellt. Das weitere Ausführungsbeispiel der Figur 4 unterscheidet sich von dem vorherigen Ausführungsbeispiel zumindest im Wesentlichen durch eine Anzahl von Treiberkonfigurationseinheiten 20b, 24b einer Haushaltsgerätevorrichtung.

Im vorliegenden Fall umfasst eine Wechselrichtereinheit 10b einen ersten Wechselrichter 72b und einen zweiten Wechselrichter 74b mit jeweils zwei Wechselrichterschaltern 12b, 14b, 16b, 18b.

Zudem weist die Haushaltsgerätevorrichtung und/oder eine Wechselrichtertreibereinheit 80b zwei Treiberkonfigurationseinheiten 20b, 24b auf. Eine erste Treiberkonfigurationseinheit 20b der Treiberkonfigurationseinheiten 20b, 24b ist einem, insbesondere als Low-Side-Schalter ausgebildeten, ersten Wechselrichterschalter 12b des ersten Wechselrichters 72b zugeordnet.

Eine zweite Treiberkonfigurationseinheit 24b der Treiberkonfigurationseinheiten 20b, 24b ist einem, insbesondere als Low-Side-Schalter ausgebildeten, dritten Wechselrichterschalter 16b des zweiten Wechselrichters 74b zugeordnet.

Als High-Side-Schalter ausgebildete Wechselrichterschalter 14b, 18b der Wechselrichter 72b, 74b sind im vorliegenden Fall nicht konfigurierbar und insbesondere frei von Treiberkonfigurationseinheiten.

Im vorliegenden Fall weist die Haushaltsgerätevorrichtung somit für jeden als Low-Side-Schalter ausgebildeten Wechselrichterschalter 12b, 16b der Wechselrichtereinheit 10b eine Treiberkonfigurationseinheit 20b, 24b auf.

In Figur 5 ist ein weiteres Ausführungsbeispiel der Erfindung gezeigt. Dem Ausführungsbeispiel der Figur 5 ist der Buchstabe c nachgestellt. Das weitere Ausführungsbeispiel der Figur 5 unterscheidet sich von den vorherigen Ausführungsbeispielen zumindest im Wesentlichen durch eine Anzahl von Trägerelementen 62c, 63c einer Haushaltsgerätevorrichtung.

Figur 5 zeigt ein Trägerelement 62c, welches zumindest im Wesentlichen einem Trägerelement 62a eines ersten Ausführungsbeispiels entspricht, wobei der Übersichtlichkeit halber in Figur 5 auf die Darstellung von Treiberkonfigurationseinheiten verzichtet wurde.

Zudem umfasst die Haushaltsgerätevorrichtung in diesem Fall ein weiteres Trägerelement 63c. Das weitere Trägerelement 63c ist im vorliegenden Fall zumindest im Wesentlichen identisch zu dem Trägerelement 62c jedoch zumindest teilweise mit im Vergleich zu dem Trägerelement 62c unterschiedlichen weiteren Wechselrichtertreibern 29c, 31c, 33c, 35c bestückt.

Das weitere Trägerelement 63c ist dabei mittels einer Kommunikationseinheit 56c mit dem Trägerelement 62c und einer Benutzerschnittstelle 58c verbunden.

### Bezugszeichen

- 10: Wechselrichtereinheit
- 12: Wechselrichterschalter
- 14: Wechselrichterschalter
- 16: Wechselrichterschalter
- 18: Wechselrichterschalter
- 20: Treiberkonfigurationseinheit
- 22: Treiberkonfigurationseinheit
- 24: Treiberkonfigurationseinheit
- 26: Treiberkonfigurationseinheit
- 28: Wechselrichtertreiber
- 29: Wechselrichtertreiber
- 30: Wechselrichtertreiber
- 31: Wechselrichtertreiber
- 32: Wechselrichtertreiber
- 33: Wechselrichtertreiber
- 34: Wechselrichtertreiber
- 35: Wechselrichtertreiber
- 36: Treiberverbindungsstelle
- 38: Treiberverbindungsstelle
- 40: Treiberverbindungsstelle
- 42: Treiberverbindungsstelle
- 52: Steuereinheit
- 54: Referenzanschluss
- 56: Kommunikationseinheit
- 58: Benutzerschnittstelle
- 60: Isoliereinheit
- 62: Trägerelement
- 63: Trägerelement
- 64: Haushaltsgerät
- 66: Gehäusemasse
- 68: Bedienelement
- 70: Bedienelement
- 72: Wechselrichter
- 74: Wechselrichter
- 76: Wechselrichterausgang
- 78: Wechselrichterausgang
- 80: Wechselrichtertreibereinheit
- 82: Leitungspfad
- 84: Leitungspfad
- 86: Leitungspfad
- 88: Leitungspfad
- 90: Wechselrichterreferenzanschluss
- 92: Wechselrichterreferenzanschluss

## Patentansprüche

1. Haushaltsgerätevorrichtung mit zumindest einer Wechselrichtereinheit (10a; 10b), welche wenigstens einen Wechselrichterschalter (12a, 14a, 16a, 18a; 12b, 14b, 16b, 18b) umfasst, mit zumindest einer Steuereinheit (52a; 52b), welche zur Steuerung der Wechselrichtereinheit (10a; 10b) vorgesehen ist, und mit zumindest einer dem Wechselrichterschalter (12a, 14a, 16a, 18a; 12b, 14b, 16b, 18b) zugeordneten Treiberkonfigurationseinheit (20a, 22a, 24a, 26a; 20b, 24b), welche dazu vorgesehen ist, den Wechselrichterschalter (12a, 14a, 16a, 18a; 12b, 14b, 16b, 18b) wahlweise mit zumindest einem von zumindest zwei Wechselrichtertreibern (28a, 30a, 32a, 34a; 30b, 34b; 28c, 29c, 30c, 31c, 32c, 33c, 34c, 35c) unterschiedlichen Typs zu verbinden, und welche zumindest eine erste Treiberverbindungsstelle (36a, 38a, 40a, 42a), welche zur Verbindung mit einem ersten Wechselrichtertreiber (28a, 30a, 32a, 34a; 30b, 34b; 28c, 29c, 30c, 31c, 32c, 33c, 34c, 35c) der Wechselrichtertreiber (28a, 30a, 32a, 34a; 30b, 34b; 28c, 29c, 30c, 31c, 32c, 33c, 34c, 35c) vorgesehen und als ein erster Steckplatz ausgebildet ist, und eine zweite Treiberverbindungsstelle (36a, 38a, 40a, 42a), welche zur Verbindung mit einem zweiten Wechselrichtertreiber (28a, 30a, 32a, 34a; 30b, 34b; 28c, 29c, 30c, 31c, 32c, 33c, 34c, 35c) der Wechselrichtertreiber (28a, 30a, 32a, 34a; 30b, 34b; 28c, 29c, 30c, 31c, 32c, 33c, 34c, 35c) vorgesehen und als ein zweiter Steckplatz ausgebildet ist, aufweist, wobei die Treiberkonfigurationseinheit (20a, 22a, 24a, 26a; 20b, 24b) eine konfigurierbare Einheit ist, welche dazu vorgesehen ist, eine Änderung des dem Wechselrichterschalter (12a, 14a, 16a, 18a; 12b, 14b, 16b, 18b) zugeordneten Wechselrichtertreibers (28a, 30a, 32a, 34a; 30b, 34b; 28c, 29c, 30c, 31c, 32c, 33c, 34c, 35c) zu ermöglichen, wobei die Änderung des Wechselrichtertreibers (28a, 30a, 32a, 34a; 30b, 34b; 28c, 29c, 30c, 31c, 32c, 33c, 34c, 35c) ein manueller und/oder mechanischer Vorgang ist, in welchem zwischen zumindest den zwei Wechsetrichtertreibern (28a, 30a, 32a, 34a; 30b, 34b; 28c, 29c, 30c, 31c, 32c, 33c, 34c, 35c) gewechselt wird, **dadurch gekennzeichnet dass**,
die Treiberkonfigurationseinheit (20a, 22a, 24a, 26a; 20b, 24b) dazu vorgesehen ist, zumindest zwei verschiedene elektrische Verbindungen und/oder Leitungspfade zwischen der Steuereinheit (52a; 52b) und dem Wechselrichterschalter (12a, 14a, 16a, 18a; 12b, 14b, 16b, 18,b) bereitzustellen und/oder zu ermöglichen.

2. Haushaltsgerätevorrichtung nach Anspruch 1, **dadurch gekennzeichnet, dass** die Treiberkonfigurationseinheit (20a, 22a, 24a, 26a; 20b, 24b) dazu vorgesehen ist, den Wechselrichterschalter (12a, 14a, 16a, 18a; 12b, 14b, 16b, 18b) mit zumindest einem nicht-isolierten ersten Wechselrichtertreiber und/oder mit zumindest einem isolierten zweiten Wechselrichtertreiber zu verbinden.

3. Haushaltsgerätevorrichtung nach Anspruch 1 oder 2, **dadurch gekennzeichnet, dass** der Wechselrichterschalter (12a, 16a; 12b, 16b) als Low-Side-Schalter ausgebildet ist.

4. Haushaltsgerätevorrichtung nach einem der vorhergehenden Ansprüche, **dadurch gekennzeichnet, dass** die Steuereinheit (52a; 52b) mit einem von einer Gehäusemasse (66a) verschiedenen Referenzanschluss (54a) verbunden ist.

5. Haushaltsgerätevorrichtung nach einem der vorhergehenden Ansprüche, **gekennzeichnet durch** zumindest eine Kommunikationseinheit (56a; 56c), welche die Steuereinheit (52a; 52b) kommunizierend mit einer Benutzerschnittstelle (58a; 58c) verbindet und welche zumindest eine Isoliereinheit (60a) aufweist, welche die Steuereinheit (52a; 52b) galvanisch von der Benutzerschnittstelle (58a; 58c) trennt.

6. Haushaltsgerätevorrichtung nach einem der vorhergehenden Ansprüche, **gekennzeichnet durch** zumindest eine weitere Treiberkonfigurationseinheit (20a, 22a, 24a, 26a; 20b, 24b), wobei die Wechselrichtereinheit (10a; 10b) wenigstens einen weiteren Wechselrichterschalter (12a, 14a, 16a, 18a; 12b, 14b, 16b, 18b) aufweist und die weitere Treiberkonfigurationseinheit (20a, 22a, 24a, 26a; 20b, 24b) dem weiteren Wechselrichterschalter (12a, 14a, 16a, 18a; 12b, 14b, 16b, 18b) zugeordnet und dazu vorgesehen ist, den weiteren Wechselrichterschalter (12a, 14a, 16a, 18a; 12b, 14b, 16b, 18b) mit zumindest einem von zumindest zwei weiteren Wechselrichtertreibern (28a, 30a, 32a, 34a; 30b, 34b; 28c, 29c, 30c, 31c, 32c, 33c, 34c, 35c) unterschiedlichen Typs zu verbinden.

7. Haushaltsgerätevorrichtung nach Anspruch 6, **dadurch gekennzeichnet, dass** der weitere Wechselrichterschalter (14a, 18a; 14b, 18b) als High-Side-Schalter ausgebildet ist.

8. Haushaltsgerätevorrichtung nach einem der vorhergehenden Ansprüche, **gekennzeichnet durch** zumindest ein Trägerelement (62a; 62c, 63c), auf welchem zumindest die Treiberkonfigurationseinheit (20a, 22a, 24a, 26a; 20b, 24b) und die Wechselrichtereinheit (10a; 10b) angeordnet sind.

9. Haushaltsgerät (64a) mit zumindest einer Haushaltsgerätevorrichtung nach einem der vorhergehenden Ansprüche.

10. Verfahren mit einer Haushaltsgerätevorrichtung, welche zumindest eine Wechselrichtereinheit (10a; 10b) aufweist, welche wenigstens einen Wechselrichterschalter (12a, 14a, 16a, 18a; 12b, 14b, 16b, 18b) umfasst, mit zumindest einer Steuereinheit (52a; 52b), welche den wenigstens einen Wechselrichterschalter (12a, 14a, 16a, 18a; 12b, 14b, 16b, 18b) der Wechselrichtereinheit (10a, 10b) steuert, und mit zumindest einer dem Wechselrichterschalter zugeordneten Treiberkonfigurationseinheit (20a, 22a, 24a, 26a; 20b, 24b), welche den Wechselrichterschalter (12a, 14a, 16a, 18a; 12b, 14b, 16b, 18b) wahlweise mit zumindest einem von zumindest zwei Wechselrichtertreibern (28a, 30a, 32a, 34a; 30b, 34b; 28c, 29c, 30c, 31c, 32c, 33c, 34c, 35c) unterschiedlichen Typs verbindet, wobei ein erster Wechselrichtertreiber (28a, 30a, 32a, 34a; 30b, 34b; 28c, 29c, 30c, 31c, 32c, 33c, 34c, 35c) der Wechselrichtertreiber (28a, 30a, 32a, 34a; 30b, 34b; 28c, 29c, 30c, 31c, 32c, 33c, 34c, 35c) mittels zumindest einer als ein erster Steckplatz ausgebildeten ersten Treiberverbindungsstelle (36a, 38a, 40a, 42a) und ein zweiter Wechselrichtertreiber (28a, 30a, 32a, 34a; 30b, 34b; 28c, 29c, 30c, 31c, 32c, 33c, 34c, 35c) der Wechselrichtertreiber (28a, 30a, 32a, 34a; 30b, 34b; 28c, 29c, 30c, 31c, 32c, 33c, 34c, 35c) mittels einer als ein zweiter Steckplatz ausgebildeten zweiten Treiberverbindungsstelle (36a, 38a, 40a, 42a) verbunden werden, wobei die Treiberkonfigurationseinheit (20a, 22a. 24a, 26a; 20b, 24b) eine konfigurierbare Einheit ist, welche dazu vorgesehen ist, eine Änderung des dem Wechselrichterschalter (12a, 14a, 16a, 18a; 12b, 14b, 16b, 18b) zugeordneten Wechselrichtertreibers (28a, 30a, 32a, 34a; 30b, 34b; 28c, 29c, 30c, 31c, 32c, 33c, 34c, 35c) zu ermöglichen, wobei die Änderung des Wechselrichtertreibers (28a, 30a, 32a, 34a; 30b, 34b; 28c, 29c, 30c, 31c, 32c, 33c, 34c, 35c) ein manueller und/oder mechanischer Vorgang ist, in welchem zwischen zumindest den zwei Wechselrichtertreibern (28a,30a, 32a, 34a; 30b, 34b; 28c, 29c, 30c, 31c, 32c, 33c, 34c, 35c) gewechselt wird,
**dadurch gekennzeichnet dass,**
zumindest eine dem Wechselrichterschalter (12a, 14a, 16a, 18a; 12b, 14b, 16b, 18b) zugeordnete Treiberverbindungsstelle (36a, 38a, 40a, 42a) wahlweise mit zumindest einem der Wechselrichtertreiber (28a, 30a, 32a, 34a; 30b, 34b; 28c, 29c, 30c, 31c, 32c, 33c, 34c, 35c) bestückt wird, wobei zumindest zwei verschiedene Verbindungen und/oder Leitungspfade mittels der Treiberkonfigurationseinheit (20a, 22a, 24a, 26a, 20b, 24b) zwischen der Steuereinheit (52a; 52b) und dem Wechselrichterschalter (12a, 14a, 16a, 18a; 12b, 14b, 16b, 18,b) bereitgestellt und/oder ermöglicht werden.

## Claims

1. Household appliance device with at least one inverter unit (10a; 10b), which comprises at least one inverter switch (12a, 14a, 16a, 18a; 12b, 14b, 16b, 18b), with at least one control unit (52a; 52b), which is provided to control the inverter unit (10a; 10b), and with at least one driver configuration unit (20a, 22a, 24a, 26a; 20b, 24b) assigned to the inverter switch (12a, 14a, 16a, 18a; 12b, 14b, 16b, 18b), which is provided to connect the inverter switch (12a, 14a, 16a, 18a; 12b, 14b, 16b, 18b) optionally with at least one of at least two inverter drivers (28a, 30a, 32a, 34a; 30b, 34b; 28c, 29c, 30c, 31c, 32c, 33c, 34c, 35c) of a different type, and which has at least one first driver connecting point (36a, 38a, 40a, 42a), which is provided for connection to a first inverter driver (28a, 30a, 32a, 34a; 30b, 34b; 28c, 29c, 30c, 31c, 32c, 33c, 34c, 35c) of the inverter drivers (28a, 30a, 32a, 34a; 30b, 34b; 28c, 29c, 30c, 31c, 32c, 33c, 34c, 35c) and is embodied as a first module slot, and a second driver connecting point (36a, 38a, 40a, 42a), which is provided for connection to a second inverter driver (28a, 30a, 32a, 34a; 30b, 34b; 28c, 29c, 30c, 31c, 32c, 33c, 34c, 35c) of the inverter drivers (28a, 30a, 32a, 34a; 30b, 34b; 28c, 29c, 30c, 31c, 32c, 33c, 34c, 35c) and is embodied as a second module slot, wherein the driver configuration unit (20a, 22a, 24a, 26a; 20b, 24b) is a configurable unit, which is provided to enable a change in the inverter driver (28a, 30a, 32a, 34a; 30b, 34b; 28c, 29c, 30c, 31c, 32c, 33c, 34c, 35c) assigned to the inverter switch (12a, 14a, 16a, 18a; 12b, 14b, 16b, 18b), wherein the change in the inverter driver (28a, 30a, 32a, 34a; 30b, 34b; 28c, 29c, 30c, 31c, 32c, 33c, 34c, 35c) is a manual and/or mechanical process, in which a change is made between at least the two inverter drivers (28a, 30a, 32a, 34a; 30b, 34b; 28c, 29c, 30c, 31c, 32c, 33c, 34c, 35c), **characterised in that**
the driver configuration unit (20a, 22a, 24a, 26a; 20b, 24b) is provided to supply and/or enable at least two different electrical connections and/or conduction paths between the control unit (52a; 52b) and the inverter switch (12a, 14a, 16a, 18a; 12b, 14b, 16b, 18b).

2. Household appliance device according to claim 1, **characterised in that** the driver configuration unit (20a, 22a, 24a, 26a; 20b, 24b) is provided to connect the inverter switch (12a, 14a, 16a, 18a; 12b, 14b, 16b, 18b) to at least one non-isolated first inverter driver and/or to at least one isolated second inverter driver.

3. Household appliance device according to claim 1 or 2, **characterised in that** the inverter switch (12a; 16a; 12b; 16b) is embodied as a low side switch.

4. Household appliance device according to one of the preceding claims, **characterised in that** the control unit (52a; 52b) is connected to a reference connection (54a) which differs from a housing earth (66a).

5. Household appliance device according to one of the preceding claims, **characterised by** at least one communication unit (56a; 56c) which connects the control unit (52a; 52b) in a communicative manner to a user interface (58a; 58c) and which has at least one isolation unit (60a), which isolates the control unit (52a; 52b) galvanically from the user interface (58a; 58c).

6. Household appliance device according to one of the preceding claims, **characterised by** at least one further driver configuration unit (20a, 22a, 24a, 26a; 20b, 24b), wherein the inverter unit (10a; 10b) has at least one further inverter switch (12a, 14a, 16a, 18a; 12b, 14b, 16b, 18b) and the further driver configuration unit (20a, 22a, 24a, 26a; 20b, 24b) is assigned to the further inverter switch (12a, 14a, 16a, 18a; 12b, 14b, 16b, 18b) and is provided to connect the further inverter switch (12a, 14a, 16a, 18a; 12b, 14b, 16b, 18b) to at least one of at least two further inverter drivers (28a, 30a, 32a, 34a; 30b, 34b; 28c, 29c, 30c, 31c, 32c, 33c, 34c, 35c) of a different type.

7. Household appliance device according to claim 6, **characterised in that** the further inverter switch (14a; 18a; 14b, 18b) is embodied as a high side switch.

8. Household appliance device according to one of the preceding claims, **characterised by** at least one support element (62a; 62c, 63c), on which at least the driver configuration unit (20a, 22a, 24a, 26a; 20b, 24b) and the inverter unit (10a; 10b) are arranged.

9. Household appliance (64a) having at least one household appliance device according to one of the preceding claims.

10. Method with a household appliance device, which has at least one inverter unit (10a; 10b), which comprises at least one inverter switch (12a, 14a, 16a, 18a; 12b, 14b, 16b, 18b), with at least one control unit (52a; 52b), which controls the at least one inverter switch (12a, 14a, 16a, 18a; 12b, 14b, 16b, 18b) of the inverter unit (10a, 10b), and with at least one driver configuration unit (20a, 22a, 24a, 26a; 20b, 24b) assigned to the inverter switch, which connects the inverter switch (12a, 14a, 16a, 18a; 12b, 14b, 16b, 18b) optionally with at least one of at least two inverter drivers (28a, 30a, 32a, 34a; 30b, 34b; 28c, 29c, 30c, 31c, 32c, 33c, 34c, 35c) of a different type, wherein a first inverter driver (28a, 30a, 32a, 34a; 30b, 34b; 28c, 29c, 30c, 31c, 32c, 33c, 34c, 35c) of the inverter drivers (28a, 30a, 32a, 34a; 30b, 34b; 28c, 29c, 30c, 31c, 32c, 33c, 34c, 35c) are connected by means of at least one first driver connecting point (36a, 38a, 40a, 42a) embodied as a first module slot and a second inverter driver (28a, 30a, 32a, 34a; 30b, 34b; 28c, 29c, 30c, 31c, 32c, 33c, 34c, 35c) of the inverter drivers (28a, 30a, 32a, 34a; 30b, 34b; 28c, 29c, 30c, 31c, 32c, 33c, 34c, 35c) are connected by means of a second driver connecting point (36a, 38a, 40a, 42a) embodied as a second module slot, wherein the driver configuration unit (20a, 22a, 24a, 26a; 20b, 24b) is a configurable unit, which is provided to enable a change in the inverter driver (28a, 30a, 32a, 34a; 30b, 34b; 28c, 29c, 30c, 31c, 32c, 33c, 34c, 35c) assigned to the inverter switch (12a, 14a, 16a, 18a; 12b, 14b, 16b, 18b), wherein the change in the inverter driver (28a, 30a, 32a, 34a; 30b, 34b; 28c, 29c, 30c, 31c, 32c, 33c, 34c, 35c) is a manual and/or mechanical process, in which a change is made between at least the two inverter drivers (28a, 30a, 32a, 34a; 30b, 34b; 28c, 29c, 30c, 31c, 32c, 33c, 34c, 35c),
**characterised in that**
at least one driver connecting point (36a, 38a, 40a, 42a) assigned to the inverter switch (12a, 14a, 16a, 18a; 12b, 14b, 16b, 18b) is optionally equipped with at least one of the inverter drivers (28a, 30a, 32a, 34a; 30b, 34b; 28c, 29c, 30c, 31c, 32c, 33c, 34c, 35c), wherein at least two different connections and/or conduction paths are supplied and/or enabled by means of the driver configuration unit (20a, 22a, 24a, 26a, 20b, 24b) between the control unit (52a; 52b) and the inverter switch (12a, 14a, 16a, 18a; 12b, 14b, 16b, 18,b).

## Revendications

1. Dispositif d'appareil électroménager comprenant au moins un poste onduleur (10a; 10b), lequel comprend au moins un commutateur d'onduleur (12a, 14a, 16a, 18a; 12b, 14b, 16b 18b) présentant au moins une unité de commande (52a; 52b), laquelle sert à commander le poste onduleur (10a; 10b), et
au moins une unité de configuration d'excitateur (20a, 22a, 24a, 26a; 20b, 24b) subordonnée au commutateur d'onduleur (12a, 14a, 16a, 18a; 12b, 14b, 16b, 18b), laquelle sert à raccorder le commutateur d'onduleur (12a, 14a, 16a, 18a; 12b, 14b, 16b, 18b) au choix à au moins l'un des au moins deux excitateurs d'onduleur (28a, 30a, 32a, 34a; 30b, 34b; 28c, 29c, 30c, 31c, 32c, 33c, 34c, 35c) de type différent, et laquelle comprend au moins un premier endroit de raccordement d'excitateur (36a, 38a, 40a, 42a), lequel sert au raccordement à un premier excitateur d'onduleur (28a, 30a, 32a, 34a; 30b, 34b; 28c, 29c, 30c, 31c, 32c, 33c, 34c, 35c) des excitateurs d'onduleur (28a, 30a, 32a, 34a; 30b, 34b; 28c, 29c, 30c, 31c, 32c, 33c, 34c, 35c) et est réalisé en tant que premier point de branchement, et un deuxième endroit de raccordement d'excitateur (36a, 38a, 40a, 42a), lequel sert au raccordement à un deuxième excitateur d'onduleur (28a, 30a, 32a, 34a; 30b, 34b; 28c, 29c, 30c, 31c, 32c, 33c, 34c, 35c) des excitateurs d'onduleur (28a, 30a, 32a, 34a; 30b, 34b; 28c, 29c, 30c, 31c, 32c, 33c, 34c, 35c) et est réalisé en tant que deuxième point de branchement, l'unité de configuration d'excitateur (20a, 22a, 24a, 26a, 20b, 24b) étant une unité configurable, laquelle sert à permettre une modification des excitateurs d'onduleur (28a, 30a, 32a, 34a; 30b, 34b; 28c, 29c, 30c, 31c, 32c, 33c, 34c, 35c) subordonnés au commutateur d'onduleur (12a, 14a, 16a, 18a; 12b, 14b, 16b, 18b), la modification des excitateurs d'onduleur (28a, 30a, 32a, 34a; 30b, 34b; 28c, 29c, 31c, 32c, 33c, 34c, 35c) étant une procédure manuelle et/ou mécanique qui consiste à passer de l'un à l'autre des au moins deux excitateurs d'onduleur (28a, 30a, 32a, 34a; 30b, 34b; 28c, 29c, 30c, 31c, 32c, 33c, 34c, 35c),
**caractérisé en ce que**
l'unité de configuration d'excitateur (20a, 22a, 24a, 26a; 20b, 24b) sert à procurer et/ou autoriser au moins deux raccordements et/ou pistes conductrices électriques différents entre l'unité de commande (52a, 52b) et le commutateur d'excitateur (12a, 14a, 16a, 18a; 12b, 14b, 16b, 18b).

2. Dispositif d'appareil électroménager selon la revendication 1,
**caractérisé en ce que** l'unité de configuration d'excitateur (20a, 22a, 24a, 26a; 20b, 24b) sert à raccorder le commutateur d'onduleur (12a, 14a, 16a, 18a; 12b, 14b, 16b, 18b) à au moins un premier excitateur d'onduleur non isolé et/ou à au moins un deuxième excitateur d'onduleur isolé.

3. Dispositif d'appareil électroménager selon la revendication 1 ou 2,
**caractérisé en ce que** le commutateur d'onduleur (12a, 16a; 12b, 16b) est réalisé en tant que commutateur côté basse tension (*Low-Side-Schalter*).

4. Dispositif d'appareil électroménager selon l'une des revendications précédentes,
**caractérisé en ce que** l'unité de commande (52a; 52b) est raccordée à une connexion de référence (54a) différente d'une masse de bâti (66a).

5. Dispositif d'appareil électroménager selon l'une des revendications précédentes,
**caractérisé par** au moins une unité de communication (56a; 56c), laquelle raccorde l'unité de commande (52a; 52b) en communication à une interface d'utilisateur (58a; 58c) et comprend au moins une unité d'isolation (60a) qui sépare l'unité de commande (52a, 52b) par galvanisation de l'interface d'utilisateur (58a; 58c).

6. Dispositif d'appareil électroménager selon l'une des revendications précédentes,
**caractérisé par** au moins une autre unité de configuration d'excitateur (20a, 22a, 24a, 26a; 20b, 24b), dans lequel le poste onduleur (10a; 10b) comprend au moins un autre commutateur d'onduleur (12a, 14a, 16a, 18a; 12b, 14b, 16b, 18b) et l'autre unité de configuration d'excitateur (20a, 22a, 24a, 26a; 20b, 24b) est subordonnée à l'autre commutateur d'onduleur (12a, 14a, 16a, 18a; 12b, 14b, 16b, 18b) et sert à raccorder l'autre commutateur d'onduleur (12a, 14a, 16a, 18a; 12b, 14b, 16b, 18b) avec au moins l'un des au moins deux autres excitateurs d'onduleur (28a, 30a, 32a, 34a; 30b, 34b; 28c, 29c, 30c, 31c, 32c, 33c, 34c, 35c) de type différent.

7. Dispositif d'appareil électroménager selon la revendication 6,
**caractérisé en ce que** l'autre commutateur d'onduleur (14a, 18a; 14b, 18b) est réalisé en tant que commutateur côté haute tension (*High-Side-Schalter*).

8. Dispositif d'appareil électroménager selon l'une des revendications précédentes,
**caractérisé par** au moins un autre élément de support (62a; 62c, 63c), sur lequel se trouvent au moins l'unité de configuration d'excitateur (20a, 22a, 24a, 26a; 20b, 24b) et le poste onduleur (10a; 10b).

9. Appareil électroménager (64a) comprenant au moins un dispositif d'appareil électroménager selon l'une des revendications précédentes.

10. Procédé comprenant un dispositif d'appareil électroménager, lequel comprend au moins un poste onduleur (10a; 10b), lequel comprend au moins un commutateur d'onduleur (12a, 14a, 16a, 18a; 12b, 14b, 16b, 18b), ayant au moins une unité de commande (52a; 52b), laquelle commande le au moins un commutateur d'onduleur (12a, 14a, 16a, 18a; 12b, 14b, 16b, 18b) du poste onduleur (14a, 14b) et ayant au moins une unité de configuration d'excitateur (20a, 22a, 24a, 26a; 20b, 24b) subordonnée au commutateur d'onduleur, lequel raccorde le commutateur d'onduleur (12a, 14a, 16a, 18a; 12b, 14b, 16b, 18b) au choix avec au moins l'un des au moins deux excitateurs d'onduleur (28a, 30a, 32a, 34a; 30b, 34b; 28c, 29c, 30c, 31c, 32c, 33c, 34c, 35c) de type différent,
dans lequel un premier excitateur d'onduleur (28a, 30a, 32a, 34a; 30b, 34b; 28c, 29c, 30c, 31c, 32c, 33c, 34c, 35c) des excitateurs d'onduleur (28a, 30a, 32a, 34a; 30b, 34b; 28c, 29c, 30c, 31c, 32c, 33c, 34c, 35c) est raccordé au moyen d'au moins un premier endroit de raccordement d'excitateur (36a, 38a, 40a, 42a) réalisé en tant que premier point de branchement, et un deuxième excitateur d'onduleur (28a, 30a, 32a, 34a; 30b, 34b; 28c, 29c, 30c, 31c, 32c, 33c, 34c, 35c) des excitateurs d'onduleur (28a, 30a, 32a, 34a; 30b, 34b; 28c, 29c, 30c, 31c, 32c, 33c, 34c, 35c) est raccordé au moyen d'un deuxième endroit de raccordement d'excitateur (36a, 38a, 40a, 42a) réalisé en tant que deuxième point de branchement, dans lequel l'unité de configuration d'excitateur (20a, 22a, 24a, 26a, 20b, 24b) est une unité configurable, laquelle sert à autoriser une modification des excitateurs d'onduleur (28a, 30a, 32a, 34a; 30b, 34b; 28c, 29c, 30c, 31c, 32c, 33c, 34c, 35c) subordonnés au commutateur d'onduleur (12a, 14a, 16a, 18a; 12b, 14b, 16b, 18b),
dans lequel la modification des excitateurs d'onduleur (28a, 30a, 32a, 34a; 30b, 34b; 28c, 29c, 31c, 32c, 33c, 34c, 35c) est une procédure manuelle et/ou mécanique qui consiste à passer de l'un à l'autre des au moins deux excitateurs d'onduleur (28a, 30a, 32a, 34a; 30b, 34b; 28c, 29c, 30c, 31c, 32c, 33c, 34c, 35c),
**caractérisé en ce qu'**au moins un endroit de raccordement d'excitateur (36a, 38a, 40a, 42a) subordonné au commutateur d'onduleur (12a, 14a, 16a, 18a; 12b 14b, 16b, 18b) peut être muni au choix d'au moins l'un des excitateurs d'onduleur (28a, 30a, 32a, 34a; 30b, 34b; 28c, 29c, 30c, 31c, 32c, 33c, 34c, 35c), dans lequel au moins deux raccordements et/ou pistes conductrices différents sont procurés et/ou autorisés au moyen de l'unité de configuration d'excitateur (20a, 22a, 24a, 26a, 20b, 24b) entre l'unité de commande (52a; 52b) et le commutateur d'onduleur (12a, 14a, 16a, 18a; 12b, 14b, 16b, 18b).
